Europäisches Patentamt

European Patent Office

Office européen des brevets

(19)

(11) Numéro de publication : **0 327 878 B1**

(12)                    **FASCICULE DE BREVET EUROPEEN**

(45) Date de publication du fascicule du brevet :
**02.01.92 Bulletin 92/01**

(51) Int. Cl.⁵ : **B61H 5/00,** F16D 65/12,
F16D 69/02

(21) Numéro de dépôt : **89101199.1**

(22) Date de dépôt : **24.01.89**

(54) **Dispositif de freinage d'un essieu d'un véhicule ferroviaire.**

(30) Priorité : **01.02.88 FR 8801110**

(43) Date de publication de la demande :
**16.08.89 Bulletin 89/33**

(45) Mention de la délivrance du brevet :
**02.01.92 Bulletin 92/01**

(84) Etats contractants désignés :
**DE ES FR GB IT SE**

(56) Documents cités :
**EP-A- 0 223 642
FR-A- 2 215 555
FR-A- 2 266 054
US-A- 4 238 006**

(73) Titulaire : **GEC ALSTHOM SA
38, avenue Kléber
F-75116 Paris (FR)**

(72) Inventeur : **Nast, Jean Daniel
34, Rue Papin
F-71200 Le Creusot (FR)**

(74) Mandataire : **Weinmiller, Jürgen et al
Lennéstrasse 9 Postfach 24
W-8133 Feldafing (DE)**

EP 0 327 878 B1

Jouve, 18, rue Saint-Denis, 75001 PARIS

**Description**

La présente invention est relative à un dispositif de freinage d'un essieu d'un véhicule ferroviaire.

On connaît, pour de tels véhicules, des dispositifs de freinage du type à air comprimé utilisant des freins à disque classiques, composés chacun d'un disque et de deux mâchoires.

Les vitesses d'exploitation des trains ont fortement augmenté depuis l'apparition des trains à grande vitesse, et le but de l'invention consiste donc à rechercher des dispositifs de freinage dont l'efficacité est plus grande.

Il existe, dans le domaine de l'aéronautique et dans la compétition automobile, des dispositifs de freinage utilisant des boîtes à disques concentriques, par exemple des boîtes "carbone sur carbone", une boîte comprenant un disque lié à l'arbre à freiner et coopérant par friction avec deux disques latéraux liés au châssis du véhicule.

Mais ces boîtes à disques n'ont jamais été utilisées dans le domaine ferroviaire.

L'utilisation d'une telle boîte à disques concentriques pour un essieu d'un véhicule ferroviaire, nécessite de résoudre divers problèmes techniques.

Tout d'abord, il est nécessaire que le dispositif de freinage qui permet le rapprochement des disques, fonctionne quelle que soit la position relative de l'essieu et de son châssis.

On sait qu'un essieu de bogie est relié élastiquement au châssis par diverses articulations assurant le guidage et l'amortissement quel que soit l'état de la voie ferrée. Il en résulte divers mouvements relatifs de l'essieu et de son châssis.

Le dispositif de freinage selon l'invention est efficace dans toutes les configurations essieu-châssis, notamment lors des prises de gauche et pour les bogies à essieux orientables, et il permet, lorsque l'action de freinage a cessé, que les disques mobiles et les disques fixes soient séparés d'une même distance évitant ainsi tout contact.

La présente invention a donc pour objet un dispositif de freinage d'un essieu d'un véhicule ferroviaire, cet essieu étant relié élastiquement à un châssis de bogie du véhicule, caractérisé en ce qu'il comporte au moins une boîte à disques concentriques, la boîte comprenant un disque de carbone solidaire et coaxial à l'essieu, deux disques de carbone disposés parallèlement au premier disque, de part et d'autre de celui-ci, et portés respectivement par deux demi-coquilles coaxiales à l'essieu et séparées de ce dernier par des roulements, le dispositif comportant deux leviers, chacune des demi-coquilles étant articulée à un levier, les premières extrémités des leviers étant articulées par rotule à l'extrémité de deux vérins fixés par rotule au châssis de bogie, les secondes extrémliés des leviers étant réunies par des premiers moyens autorisant, en coopération avec des seconds moyens de réunion des vérins, des débattements entre l'essieu et le châssis de bogie.

L'invention sera bien comprise par la description de trois modes de réalisation de l'invention en référence au dessin annexé dans lequel :

— la figure 1 est vue de dessus schématique partielle d'un essieu muni d'un système de freinage selon un premier mode de réalisation de l'invention.

— la figure 2 est une vue élévation correspondant à la figure 1.

— la figure 3 est une vue de dessus schématique partielle d'un essieu muni d'un dispositif de freinage selon un deuxième mode de réalisation de l'invention.

— la figure 4 est une vue en élévation correspondant à la figure 3.

— la figure 5 est une vue de dessus schématique partielle d'un essieu muni d'un système de freinage selon un troisième mode de réalisation de l'invention.

— la figure 5A représente une partie de la figure 5 selon une variante.

— la figure 6 est une vue en élévation correspondant à la figure 5.

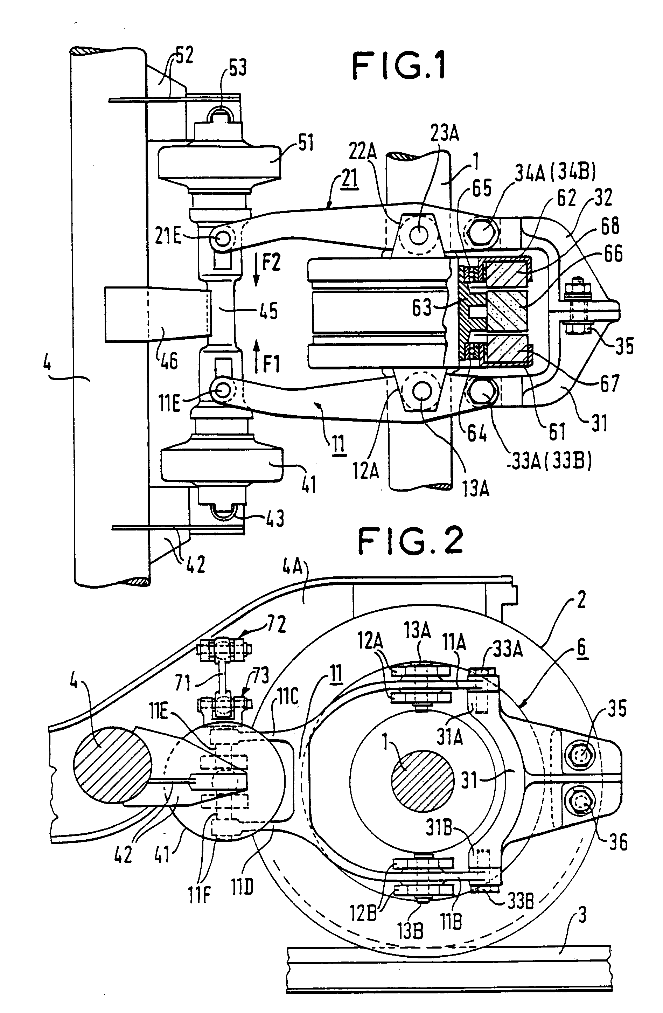

Dans les figures 1 et 2, la référence 1 désigne un essieu, représenté partiellement, et portant des roues telles que la roue 2 roulant sur un rail 3.

Les références 4 et 4A désignent des éléments du châssis auquel l'essieu est relié élastiquement par des moyens classiques non représentés.

Une boîte de frein à disques carbone-carbone 6, est associée à l'essieu 1. Elle comprend deux demi-coquilles 61 et 62 et un moyeu 63.

Le moyeu est rendu solidaire de l'essieu et tourne avec lui.

Les demi-coquilles sont séparées du moyeu par des roulements, par exemple à billes, 64 et 65. Au moyeu 63 est fixé un disque en carbone 66 qui coopère, pour le freinage, avec deux disques de carbone 67 et 68 respectivement solidaires des demi-coquilles 61 et 62.

Le freinage est exercé en réalisant des poussées convergentes sur les demi-coquilles 61 et 62. Les poussées sont obtenues au moyen de deux leviers 11 et 21. Chaque levier est commandé par un vérin, le levier 11 par le vérin 41 et le levier 21 par le vérin 51.

Le dispositif étant entièrement symétrique, on ne décrira en détail que la nature et la commande du levier 11, celles du levier 21 étant tout à fait identiques.

Le levier 11 comprend une fourche à deux branches 11A et 11B, articulées à deux paires d'oreilles 12A et 12B rapportées sur la demi coquille 61 selon des axes 13A, 13B, simples, perpendiculaires à l'essieu 1. Le levier 11 est relié à la tige du vérin 41 par une fourche 11C, 11D avec articulations à rotules 11E, 11F. Le levier 21 est articulé de même façon à la demi-coquille 62 ; on distingue un oreille 22A, d'axe 23A, ainsi que l'articulation 21E.

Le vérin 41, pneumatique, à double effet, est fixé au châssis au moyen d'un bras 42 et d'une rotule 43.

Le vérin 51 est de la même manière fixée au châssis par un bras 52 et une rotule 53.

Les deux vérins sont en outre réunis par une poutre 45 fixée rigidement à un bras 46 lui-même fixé au châssis 4.

Les efforts verticaux au niveau des extrémités des axes 11E et 21E sont repris par deux biellettes placées verticalement, telle que la biellette 71 reliée d'une part au châssis 4A par une articulation à rotule 72 et d'autre part à l'axe 11E par une articulation à rotule 73.

Les points d'appui des leviers 11 et 21 sont constitués respectivement par des bielles 31 et 32 en forme de flasque ; le flasque 31 est articulé en 31A et 31B aux branches 11A et 11B du levier 11 et fixés par les écrous 33A et 33B. L'articulation est simple, d'axe perpendiculaire à l'essieu 1 et parallèle au plan des disques.

Le flasque 32 est fixé au levier 21 de la même façon ; on distingue l'écrou 34A dans la figure 1.

Les flasques 31 et 32 sont reliées entre eux par une liaison à vis et écrous 35, 36 permettant un débattement des flasques l'un par rapport à l'autre selon un axe parallèle à l'essieu 1. A cet effet, les trous de passage des vis sont oblongs.

Le fonctionnement du frein est le suivant :

Le frein étant dans la position relachée montrée dans la figure 1, on alimente les vérins 41 et 51 (au moyen d'un distributeur d'air comprimé non représenté) de manière que les tiges se déplacent dans le sens des flèches F1 et F2.

Les leviers pivotent autour des axes 33A, 33B, 34A, 34B et rapprochent ainsi les demi-coquilles ce qui met en contact les disques 67 et 68 avec le disque 66.

Le relachement du frein s'obtient par une commande inverse des vérins conduisant à l'écartement des demi-coquilles.

Grâce au montage des leviers et des vérins sur rotules et de la constitution des bielles d'appui avec articulations, le dispositif de freinage peut fonctionner même si l'essieu subit des écarts angulaires importants par rapport au châssis.

La démultiplication de l'effort grâce à des leviers de longueur réduite permet l'application sur les disques d'efforts importants tout en conservant au dispositif un encombrement limité.

La disposition retenue, parfaitement symétrique par rapport à un plan perpendiculaire à l'axe de l'essieu, permet d'assurer à tout moment des distances égales respectivement entre chacune des faces du disque 66 et les disques fixes 67 et 68.

La symétrie confère en outre l'avantage d'obtenir des poussées parfaitement axiales.

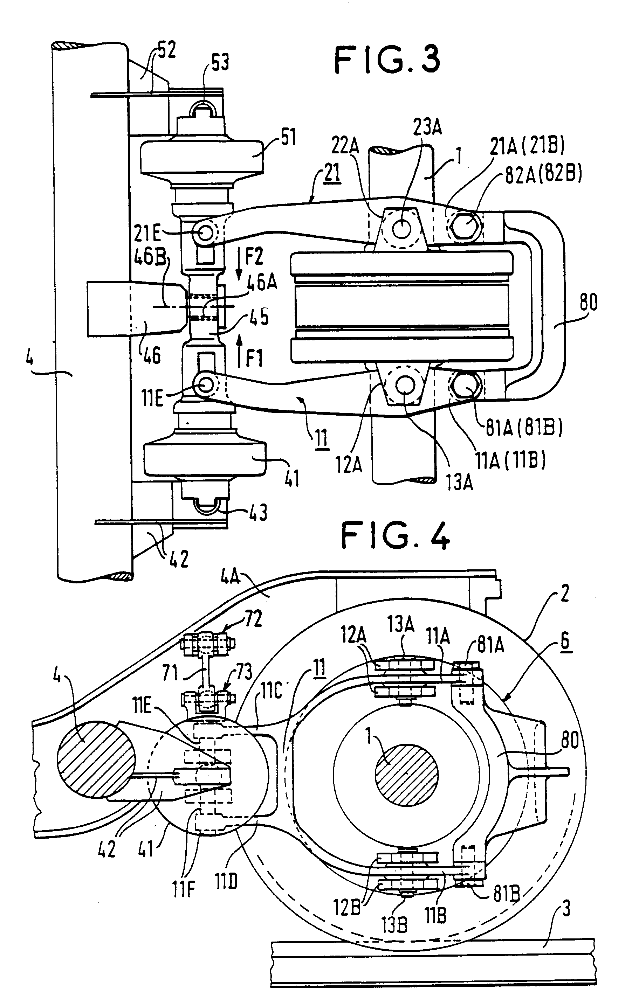

Les figures 3 et 4 représentent une variante de réalisation dans laquelle les leviers 11 et 21 prennent leur appui sur un flasque monobloc 80, articulé à l'extrémité des bras 11A, 11B, 21A, 21B, par des articulations simples d'axe perpendiculaire à l'essieu 1, 81A, 81B, 82B, 82B et parallèle au plan des disques. Pour permettre les débattements angulaires entre le châssis 4, 4A et l'essieu 1, la poutre 45 reliant les vérins 41 et 51 est fixée au bras 46 par une articulation 46A autorisant la rotation de la poutre 45 autour de l'axe 46B du bras 46, perpendiculaire à l'essieu 1.

Cette disposition a les mêmes avantages que ceux de la disposition des figures 1 et 2, avec en plus, un moindre encombrement.

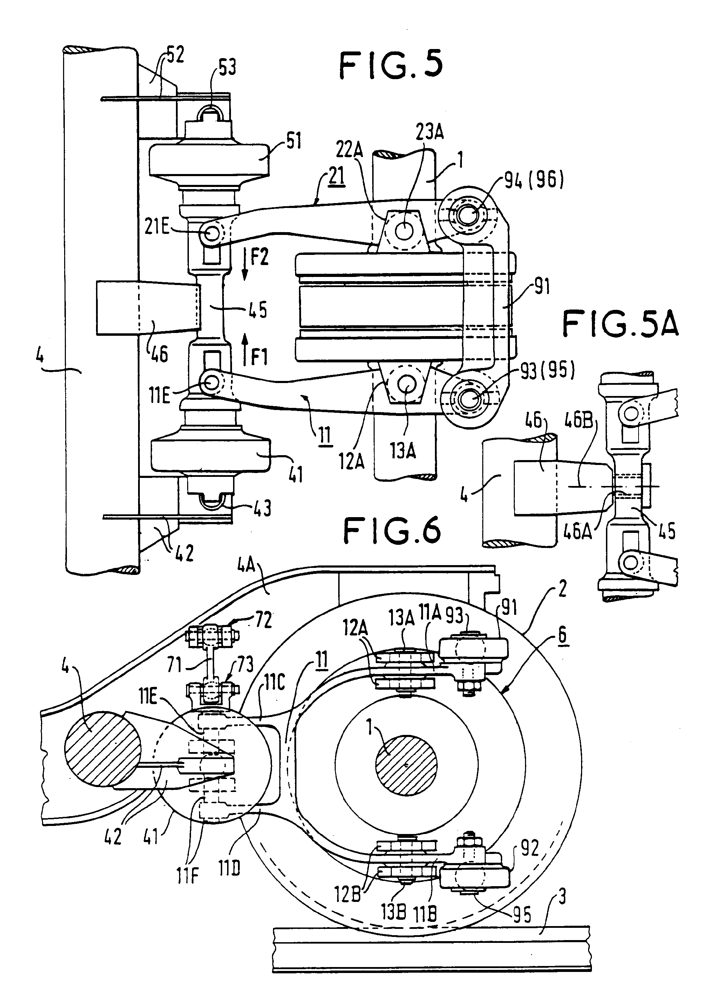

Les figures 5 et 6 montrent une variante dans laquelle les leviers 11 et 21 sont réunis par deux bielles 91 et 92 articulées aux extrémités 11A, 21A, et 11B, 21B par des articulations à rotule 93, 94, 95, 96.

La poutre 45 réunissant les deux vérins est cette fois fixée rigidement au bras 46 fixé au châssis 4.

On peut envisager une variante de réalisation du dispositif des figures 5 et 6, en reliant comme le montre la figure 5A, la poutre 45 au bras 46 par une liaison axiale 46A autorisant une rotation de la poutre 45 autour de l'axe 46B du bras 46 (comme dans les figures 3 et 4).

Mais alors, on remplace les articulations à rotule (93, 94, 95, 96) par des axes simples de direction verticale comme dans les figures 3 et 4.

La disposition des figures 5 et 6 et de sa variante sus indiquée a les mêmes avantages que ceux des dispositions des figures 3 et 4, avec, en plus, un certain allégement.

## Revendications

1. Dispositif de freinage d'un essieu (1) d'un véhicule ferroviaire, cet essieu étant relié élastiquement à un châssis de bogie (4, 4A) du véhicule, caractérisé en ce qu'il comporte au moins une boîte à disques concentriques, la boîte comprenant un disque (66) de carbone solidaire et coaxial à l'essieu (1), deux disques (67, 68) de carbone disposés parallèlement au premier disque, de part et d'autre de celui-ci, et portés respectivement par deux demi-coquilles (61, 62) coaxiales à l'essieu et séparées de ce dernier par des roulements (64, 65), le dispositif comportant deux leviers (11, 21), chacune des demi-coquilles étant articulée à un levier, les premières extrémités des leviers étant articulées par rotule à l'extrémité de deux vérins (41, 51) fixés par rotule au châssis de bogie, les secondes extrémités des leviers (11, 21) étant réunies par des premiers moyens autorisant, en coopération avec des seconds moyens de réunion des vérins, des débattements entre l'essieu (1) et le châssis de bogie (4, 4A).

2. Dispositif selon la revendication 1, caractérisé en ce que lesdits premiers moyens sont constitués de deux flasques (31, 32) reliés chacun à une seconde extrémité d'un des leviers (11, 21) par une articulation (33A, 34A) simple, d'axe perpendiculaire à l'essieu et parallèle au plan des disques, les deux flasques étant réunis entre eux par une liaison (35, 36) autorisant un débattement des flasques dans un plan parallèle au plan des disques, les seconds moyens de réunion des vérins comprenant une poutre (45) fixée rigidement à un bras (46) solidaire du châssis (4).

3. Dispositif selon la revendication 1, caractérisé en ce que lesdits premiers moyens sont constitués d'un flasque monobloc (80) articulé aux secondes extrémités desdits leviers par des articulations (81A, 81B, 82A, 82B) simples d'axe perpendiculaire à l'essieu (1) et parallèle au plan des disques, les seconds moyens de réunion des vérins comprenant une poutre (45) reliée au châssis par l'intermédiaire d'une articulation simple (46A) autorisant une rotation de la poutre autour d'un axe perpendiculaire à l'essieu (1).

4. Dispositif selon la revendication 1, caractérisé en ce que lesdits premiers moyens comprennent une bielle (91) articulée aux secondes extrémités des leviers par des rotules (93, 94), les seconds moyens de réunion des vérins comprenant une poutre (45) fixée rigidement à un bras (46) solidaire du châssis (4).

5. Dispositif selon la revendication 1, caractérisé en ce que lesdits premiers moyens comprennent une bielle (91) articulée aux secondes extrémités des leviers par des articulations simples d'axe perpendiculaire à l'essieu et parallèle au plan des disques, les seconds moyens de réunion des vérins comprenant une poutre (45) reliée au châssis par l'intermédiaire d'une articulation simple (46A) autorisant une rotation de la poutre autour d'un axe (46B) perpendiculaire à l'essieu.

6. Dispositif selon l'une des revendications 1 à 5, caractérisé en ce que chaque levier (11, 21) comporte deux branches (11A, 11B, 12A, 12B), le nombre des articulations ou des bielles étant doublé.

7. Dispositif selon l'une des revendications 1 à 6, caractérisé en ce que les extrémités des leviers (11, 21) situées du côté des vérins sont réunies chacune au châssis (4A) par une biellette (71) placée verticalement et articulée d'une part par rotule (72) au châssis (4A), d'autre part par rotule (73) audit levier.

## Claims

1. An axle brake unit for a railway vehicle, the axle being resiliently connected to a bogie frame (4, 4A) of the vehicle, the brake unit being characterized in that it comprises at least one box having concentric disks, the box comprising a carbon disk (66) secured to a coaxial with the axle (1), two carbon disks (67, 68) disposed parallel to the first disk on either side thereof, and held by two respective half-shells (61, 62) coaxial with the axle and separated from the axle by bearings (64, 65), the brake unit further comprising two levers (11, 21), each of the half-shells being hinged to one of the levers, the first ends of the levers being hinged by fill joints to the ends of two actuators (41, 51) themselves fixed by ball joints to the bogie frame, the second ends of the levers (11, 21) being interconnected by first means cooperating with actuator-interconnecting second means, to enable the axle (1) to move relative to the bogie frame (4, 4A).

2. A brake unit according to claim 1, characterized in that said first means are constituted by two firs (31, 32) each connected to a second end of one of the levers (11, 21) by a hinge (33A, 34A) having a single axis perpendicular to the axle and parallel to the plane of the disks, the two bars being interconnected by a link (35, 36) allowing the bars to move in a plane parallel to the plane of the disks, the actuator-interconnecting second means comprising a strut (45) fixed rigidly to an arm (46) secured to the frame (4).

3. A brake unit according to claim 1, characterized in that said first means are constituted by a single bar (80) hinged to the second ends of said levers by hinges (81A, 81B, 82A, 82B) with single axes perpendicular to the axle (1) and parallel to the plane of the disks, the actuator-interconnecting second means comprising a strut (45) connected to the frame by means of a single-axis joint (46A) allowing the strut to rock about an axis perpendicular to the axle (1).

4. A brake unit according to claim 1, characterized in that said first means comprise a link (91) hinged to the second ends of the levers by ball joints (93, 94), the actuator-interconnecting second means comprising a strut (45) rigidly fixed to an arm (46) secured to the frame (4).

5. A brake unit according to claim 1, characterized in that said first means comprise a link (91) hinged to the second ends of the levers by hinges having single axes perpendicular to the axle and parallel to the plane of the disks, the actuator-interconnecting second means comprising a strut (45) connected to the frame by means of a single-axis joint (46A) allowing the strut to rock about an axis perpendicular to the axle.

6. A brake unit according to one of the claims 1 to 5, characterized in that each lever (11, 21) comprises two prongs (11A, 11B, 12A, 12B), with the number of joints, hinges, or links being doubled.

7. A brake unit according to one of the claims 1 to 6, characterized in that the ends of the levers (11, 21) situated beside the actuators are each connected to the frame (4A) by a link (71) placed vertically and hinged at one end by a ball joint (72) to the frame (4A), and at the other end by a ball joint (73) to said lever.

**Patentansprüche**

1. Vorrichtung zum Bremsen einer Wagenachse (1) eines Schienenfahrzeugs, wobei diese Achse elastisch mit einem Drehgestellchassis (4, 4A) des Fahrzeugs verbunden ist, dadurch gekennzeichnet, daß sie mindestens ein Gehäuse mit konzentrischen Scheiben aufweist, wobei das Gehäuse eine Kohlenstoffscheibe (66) aufweist, die mit der Achse (1) fest verbunden und koaxial zu ihr ist, zwei Kohlenstoffscheiben (67, 68), die parallel und auf beiden Seiten der ersten Scheibe angeordnet sind und die von zwei Halbschalen (61, 62) getragen werden, die koaxial zur Achse liegen und von dieser durch Rollager (64, 65) getrennt sind, wobei die Vorrichtung zwei Hebel (11, 21) aufweist, jede der Halbschalen an einem Hebel angelenkt ist, die ersten Enden der Hebel über Kugelgelenke mit dem Ende zweier Kraftzylinder (41, 51) verbunden sind, die über Kugelgelenke am Drehgestellchassis befestigt sind, während die zweiten Enden der Hebel (11, 21) durch erste Mittel zusammengeführt sind, die, in Zusammenwirkung mit zweiten Mitteln zum Zusammenführen der Kraftzylinder, Relativbewegungen zwischen der Achse (1) und dem Drehgestellchassis (4, 4A) erlauben.

2. Vorrichtung nach Anspruch 1, dadurch gekennzeichnet, daß die ersten Mittel aus zwei Flanschen (31, 32) bestehen, die je mit einem zweiten Ende eines der Hebel (11, 21) durch ein einfaches Gelenk (33A, 34A) verbunden sind, dessen Achse senkrecht zur Wagenachse und parallel zur Ebene der Scheiben liegt, wobei die beiden Flansche untereinander durch eine Verbindung (35, 36) verbunden sind, die eine Relativbewegung der Flansche in einer zur Ebene der Scheiben parallelen Ebene erlauben, wobei die zweiten Mittel zum Zusammenführen der Kraftzylinder einen Balken (45) aufweisen, der starr an einem fest mit dem Chassis (4) verbundenen Arm (46) befestigt ist.

3. Vorrichtung nach Anspruch 1, dadurch gekennzeichnet, daß diese ersten Mittel aus einem Monoblock-Flansch (80) bestehen, der an den zweiten Enden der Hebel durch einfache Gelenke (81A, 81B, 82A, 82B) angelenkt ist, deren Achse senkrecht zur Wagenachse (1) und parallel zur Ebene der Scheiben liegt, wobei die zweiten Mittel zum Zusammenführen der Kraftzylinder einen Balken (45) aufweisen, der mit dem Chassis über ein einfaches Gelenk (46A) verbunden ist, das eine Drehung des Balkens um eine zur Wagenachse (1) senkrecht liegende Achse erlaubt.

4. Vorrichtung nach Anspruch 1, dadurch gekennzeichnet, daß die ersten Mittel eine Gelenkstange (91) aufweisen, die mit den zweiten Enden der Hebel über Kugelgelenke (93, 94) gelenkig verbunden sind, wobei die zweiten Mittel zum Zusammenführen der Kraftzylinder einen Balken (45) aufweisen, der starr an einem fest mit dem Chassis (4) verbundenen Arm (46) befestigt ist.

5. Vorrichtung nach Anspruch 1, dadurch gekennzeichnet, daß die ersten Mittel eine Gelenkstange (91) aufweisen, die an die zweiten Enden der Hebel durch einfache Gelenke angelenkt sind, deren Achse senkrecht zur Wagenachse und parallel zur Ebene der Scheiben liegt, wobei die zweiten Mittel zur Zusammenführung der Kraftzylinder einen Balken (45) aufweisen, der über ein einfaches Gelenk (46A) mit dem Chassis verbunden ist, das eine Drehung des Balkens um eine Achse (46) senkrecht zur Wagenachse erlaubt.

6. Vorrichtung nach einem der Ansprüche 1 bis 5, dadurch gekennzeichnet, daß jeder Hebel (11, 21) zwei Zweige (11A, 11B, 12A, 12B) aufweist, wobei die Anzahl der Gelenke oder der Gelenkstangen verdoppelt ist.

7. Vorrichtung nach einem der Ansprüche 1 bis 6, dadurch gekennzeichnet, daß die Enden der Hebel (11, 21), die sich auf der Seite der Kraftzylinder befinden, je mit dem Chassis (4A) über einen Arm (71) verbunden sind, der senkrecht angeordnet ist und einerseits durch ein Kugelgelenk (72) mit dem Chassis (4A) und andererseits durch ein Kugelgelenk (73) mit dem Hebel verbunden ist.

# FIG.1

# FIG.2

6

# FIG.3

# FIG.4

# FIG.5

# FIG.5A

# FIG.6